# EUROPÄISCHE PATENTSCHRIFT

(11) **EP 3 011 175 B1**
(45) Veröffentlichungstag und Bekanntmachung des Hinweises auf die Patenterteilung: **02.12.2020**
(21) Anmeldenummer: 14731634.3
(22) Anmeldetag: 19.06.2014
(51) Int. Cl.: F03D 13/20, E04H 12/16, E02D 27/42

(54) **WINDENERGIEANLAGEN-FUNDAMENT**
WIND TURBINE FOUNDATION
FONDATION D'ÉOLIENNE

(30) Priorität: 21.06.2013 DE 102013211750
(43) Veröffentlichungstag der Anmeldung: 27.04.2016
(73) Patentinhaber: Wobben Properties GmbH, 26607 Aurich (DE)
(72) Erfinder: COORDES, Thomas, 26632 Ihlow (DE); POLLMAN, Frank, 22391 Hamburg (DE); GRÖSS, Alexander, 26409 Wittmund (DE)
(74) Vertreter: Eisenführ Speiser
(86) Internationale Anmeldenummer: PCT/EP2014/062963
(87) Internationale Veröffentlichungsnummer: WO 2014/202733

(56) Entgegenhaltungen:
- EP-A1- 2 339 094
- EP-A2- 1 262 614
- DE-A1-102010 023 263
- US-A1- 2012 205 133

## Beschreibung

Die vorliegende Erfindung betrifft eine Windenergieanlage und ein Windenergieanlagen-Fundament.

Bevor ein Turm einer Windenergieanlage errichtet wird, muss ein entsprechendes Fundament im Boden vorgesehen sein. Das Fundament wird typischerweise z. B. mit Beton vor Ort gegossen. Nachdem der Beton ausgehärtet ist, kann ein erstes Turmsegment auf dem Fundament platziert werden.

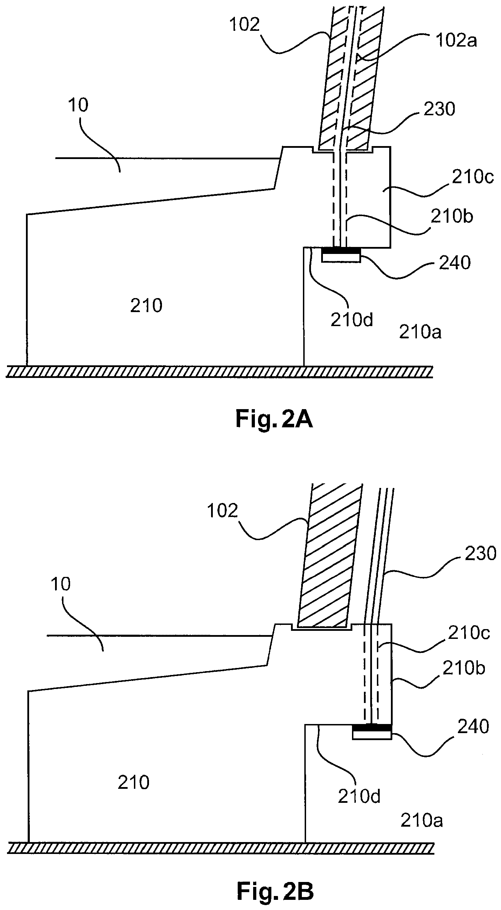

Fig. 2A zeigt eine schematische Darstellung eines Fundaments einer Windenergieanlage gemäß dem Stand der Technik. Ein aus Beton gegossenes Fundament 210 weist einen Anguss 210c bzw. einen angegossenen Ring 210c auf, der eine Bohrung 210b zur Aufnahme eines Spannseils 230 aufweist. Der Anguss 210c befindet sich dabei unterhalb des Bodens. In der Wandung der Turmsegmente 102 ist eine Mehrzahl von Bohrungen 102a vorgesehen, durch welche die jeweiligen Spannseile bzw. Spannlitzen 230 geführt werden können. Diese Spannlitzen 230 werden dazu verwendet, die Segmente des Turms der Windenergieanlage zu verspannen. Am unteren Ende 210d des Angusses 210c ist mindestens ein Spannlitzenkopf 240 vorgesehen. Unterhalb des Angusses 210c kann ein Keller bzw. ein weiterer Raum 210a vorgesehen sein, wo die Spannlitzen 230 mittels des Spannlitzenkopfes 240 vorgespannt werden können. Bei der Ausgestaltung von Fig. 2A wird eine Innenverspannung, d. h. die Spannlitzen verlaufen innerhalb der Turmwandung, gezeigt.

Fig. 2B zeigt eine schematische Darstellung eines Fundaments einer Windenergieanlage gemäß dem Stand der Technik. Das Fundament 210 wird aus Beton gegossen und weist einen Anguss 210c mit mindestens einer Bohrung 210b für das Spannseil bzw. die Spannlitze 230 auf. Im Gegensatz zu Fig. 2A wird die Spannlitze 230 nicht innerhalb der Schalung des Turms, sondern innerhalb des Turms und außerhalb der Turmwandung geführt, so dass es sich hierbei um einen innen verspannten bzw. extern verspannten Turm handelt. Wie in Fig. 2A weist der Anguss eine Unterseite 210a auf, wo ein Spannlitzenkopf 240 zum Spannen der Spannlitze bzw. des Spannseiles vorgesehen ist.

Oberhalb des Betonfundaments 210 kann zumindest teilweise Erde, Kies 10 oder dergleichen vorgesehen sein.

Um die Spannlitzen 230 mittels des Spannlitzenkopfes spannen zu können, muss ein Fundamentkeller 210a, d. h. ein Raum unterhalb des Bodenniveaus, vorgesehen sein. Beispiele aus dem Stand der Technik sind aus EP2339094 und EP1262614 bekannt.

Es ist eine Aufgabe der vorliegenden Erfindung, eine Windenergieanlage mit einem verbesserten Fundament bzw. ein verbessertes Windenergieanlagen-Fundament vorzusehen.

Diese Aufgabe wird durch eine Windenergieanlage nach Anspruch 1 sowie durch ein ein Verfahren zum Errichten einer Windenergieanlage nach Anspruch 2 gelöst.

Somit wird eine Windenergieanlage mit einem Fundament und einem Turm vorgesehen, der auf dem Fundament platziert ist. Das Fundament weist eine Fundamentplatte und einen Fundamentsockel auf der Fundamentplatte auf. An dem Fundamentsockel wird ein Spannlitzenanschluss mit einer Mehrzahl von Bohrungen zur Aufnahme von Spannlitzen vorgesehen. Die Spannlitzen sind an einer Unterseite des Anschlusses mittels eines Spannlitzenkopfes verspannt. Die Fundamentplatte und der Fundamentsockel sind aus Beton gegossen, und der Fundamentsockel kann den Boden überragen, während die Fundamentplatte sich unterhalb des Bodens befindet.

Der Abstand zwischen der Oberseite der Betonplatte und einer Unterseite des Spannlitzenanschlusses sollte so groß gewählt sein, dass die Arbeiter ausreichend Platz haben, um die Spannlitzen zu spannen.

Gemäß der vorliegenden Erfindung sind die Fundamentplatte und der Fundamentsockel aus Ortbeton in einem Stück gegossen.

Die Erfindung betrifft ebenfalls ein Windenergieanlagen-Fundament mit einer Fundamentplatte und einem Fundamentsockel auf der Fundamentplatte. An dem Fundamentsockel ist ein Anguss mit einer Mehrzahl von Bohrungen zur Aufnahme von Spannseilen oder Spannlitzen vorgesehen. Die Spannseile oder Spannlitzen werden an einer Unterseite des Angusses mittels eines Spannlitzenkopfes verspannt. Die Fundamentplatte und der Fundamentsockel sind aus Beton gegossen und können den Boden überragen.

Die Erfindung betrifft den Gedanken, ein Betonfundament mit einem Betonsockel vorzusehen und den Anguss für die Spannlitzen am Sockel vorzusehen. Der Sockel ist hierbei oberhalb des Fundaments angeordnet.

Zur Errichtung einer Windenergieanlage bzw. eines Turms einer Windenergieanlage wird zunächst das Fundament vorgesehen und anschließend werden Turmsegmente auf dem Fundament platziert. Die Turmsegmente und das Fundament werden dann durch Spannlitzen zu einem statischen System verbunden. Die Turmsegmente sowie das Fundament können getrennt hergestellt und geliefert werden. Durch das erfindungsgemäße Fundament kann auf einen Fundamentkeller sowie auf eine Fundamentabdeckung verzichtet werden. Gemäß der Erfindung können die Fundamente flacher konstruiert werden, so dass die Baukosten, der Aushub und die Aufbauzeit erheblich gesenkt werden können.

Die Erfindung betrifft ferner den Gedanken, ein unteres Turmsegment direkt zusammen mit dem Fundament aus Beton bzw. Ortbeton zu gießen, so dass das Fundament eine Fundamentplatte und auf der Platte einen Sockel bzw. ein Segment aufweist, welches an ein darauf platziertes Fundament angepasst ist und über dem Fundament bzw. über dem Boden angeordnet ist. An dem Sockel bzw. dem Segment wird ein Anguss mit einer Mehrzahl von Bohrungen zur Aufnahme eines Spannseils bzw. einer Spannlitze vorgesehen. Das erfindungsgemäße Fundament kann sowohl zur internen Verspannung oder zur externen Verspannung (innerhalb des Turms) verwendet werden.

Gemäß der Erfindung wird der Sockel bzw. das Segment in Form eines unteren Turmsegmentes des Turms zusammen mit dem Fundament gegossen. Der Sockel überragt den Boden bzw. das Bodenniveau. Dies ist vorteilhaft, weil somit kein Fundamentkeller mehr vorgesehen sein muss und es ist ausreichend Platz vorhanden, um die Spannlitzen mittels eines Spannlitzenkopfes zu verspannen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A und 2B: zeigen jeweils eine schematische Schnittansicht eines Fundamentseiner Windenergieanlage gemäß dem Stand der Technik,
- Fig. 3: zeigt eine schematische Schnittansicht eines Fundaments einer Windenergieanlage gemäß einem ersten Ausführungsbeispiel,
- Fig. 4: zeigt eine schematische Schnittansicht eines Fundaments einer Windenergieanlage gemäß einem zweiten Ausführungsbeispiel,
- Fig. 5: zeigt eine schematische Schnittansicht eines Fundaments einer Windenergieanlage
- Fig. 6: zeigt eine schematische Darstellung eines Fundaments einer Windenergieanlage
- Fig. 7: zeigt eine schematische Schnittansicht eines Fundaments einer Windenergieanlage und
- Fig. 8: zeigt eine schematische Schnittansicht eines Fundaments einer Windenergieanlage

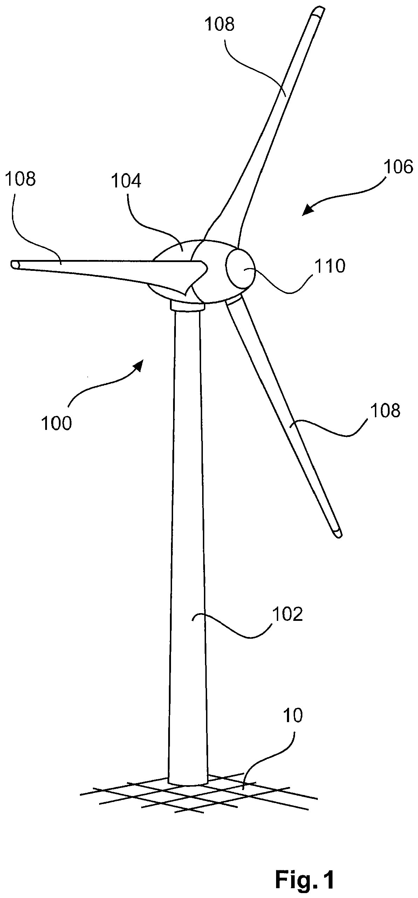

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch den Rotor oder Läufer des Generators in der Gondel 104. Der Pitchwinkel der Rotorblätter 108 kann durch Pitchmotoren an den Rotorblattwurzeln der jeweiligen Rotorblätter 108 verändert werden.

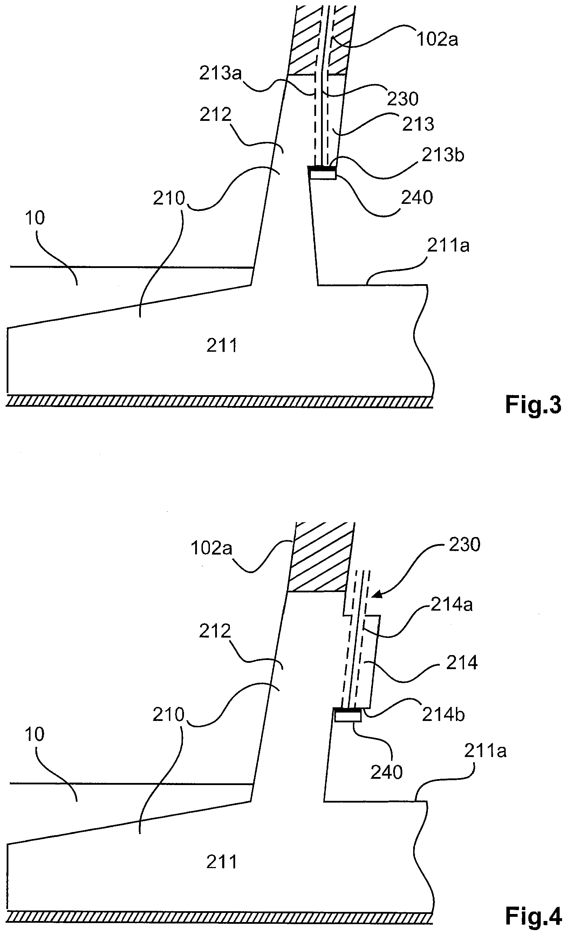

Fig. 3 zeigt eine schematische Schnittansicht eines Fundaments einer Windenergieanlage gemäß einem ersten Ausführungsbeispiel. Das Fundament 210 der Windenergieanlage weist eine Fundamentplatte 211 mit einem Fundamentsockel bzw. Fundamentsegment 212 auf. Der Fundamentsockel bzw. das Fundamentsegment 212 ist kreisförmig ausgestaltet und dient dazu, dass ein erstes Turmsegment 102a darauf platziert wird. Der Fundamentsockel bzw. das Fundamentsegment 212 ragt über den Boden bzw. das Bodenniveau 10 hinaus, während die Fundamentplatte unterhalb des Bodenniveaus vorgesehen ist.

An dem Fundamentsockel bzw. Fundamentsegment 212 ist ein Spannlitzenanschluss optional in Form eines Angusses 213 mit einer Mehrzahl von Bohrungen 213a jeweils zur Aufnahme einer Spannlitze bzw. eines Spannseils 230 vorgesehen. Auf dem Fundamentsockel bzw. Fundamentsegment 212 kann ein erstes Turmsegment 102a eines Turms der Windenergieanlage platziert werden.

Das erste Ausführungsbeispiel zeigt eine interne Verspannung der Turmsegmente des Turms der Windenergieanlage, da die Spannseile bzw. Spannlitzen 230 innerhalb der Turmwandung bzw. der Turmsegmente verlaufen.

Fig. 4 zeigt eine schematische Darstellung eines Fundaments einer Windenergieanlage gemäß einem zweiten Ausführungsbeispiel. Das Fundament 210 weist eine Fundamentplatte 211 (unterhalb des Bodenniveaus) und einen Fundamentsockel bzw. ein Fundamentsegment 212 (oberhalb des Bodenniveaus) auf. An dem Fundamentsockel bzw. Fundamentsegment 212 ist ein Spannlitzenanschluss optional in Form eines Angusses 214 mit einer Mehrzahl von Bohrungen 214a vorgesehen, welche zur Aufnahme von Spannlitzen bzw. Spannseilen verwendet werden. An einem unteren Ende 214b des Angusses 214 wird ein Spannlitzenkopf 240 zum Verspannen der Spannlitzen 230 vorgesehen.

Gemäß dem zweiten Ausführungsbeispiel wird eine externe Verspannung gezeigt, da hier die Spannseile nicht innerhalb der Turmwandung, sondern außerhalb der Turmwandung aber innerhalb des Turms vorgesehen sind.

Die Windenergieanlagen-Fundamente gemäß dem ersten und zweiten Ausführungsbeispiel unterscheiden sich im Wesentlichen durch die Ausgestaltung des Angusses 213, 214, welche jeweils vorgesehen sind, um eine Verspannung der Spannlitzen bzw. Spannseile zu ermöglichen. Der Anguss bzw. der Spannlitzenanschluss 213, 214 ist optional oberhalb des Bodens 10 bzw. des Bodenniveaus angeordnet. Damit kann ein Fundamentkeller vermieden werden. Der Anguss 213, 214 gemäß dem ersten oder zweiten Ausführungsbeispiel kann als ein Ring vorgesehen werden, der sich entlang des gesamten Umfangs des Turmes erstrecken kann.

Optional kann die Entfernung zwischen einem oberen Ende 211a der Fundamentplatte 211 und einem unteren Ende 213b, 214b des Angusses 213, 214 mindestens einen Meter betragen. Optional kann die Höhe des Angusses 213, 214 mindestens einen Meter betragen.

Der Spannlitzenanschluss kann optional als ein Anguss 214 ausgestaltet sein und kann zusammen mit der Fundamentplatte 211 und dem Sockel 212 gegossen werden.

Gemäß weiteren, nicht beanspruchten Beispielen wird ein Fundamentsockel bzw. Fundamentsegment nicht aus Beton zusammen mit dem restlichen Fundament gegossen, sondern als eine Stahlturmfußsektion ausgebildet.

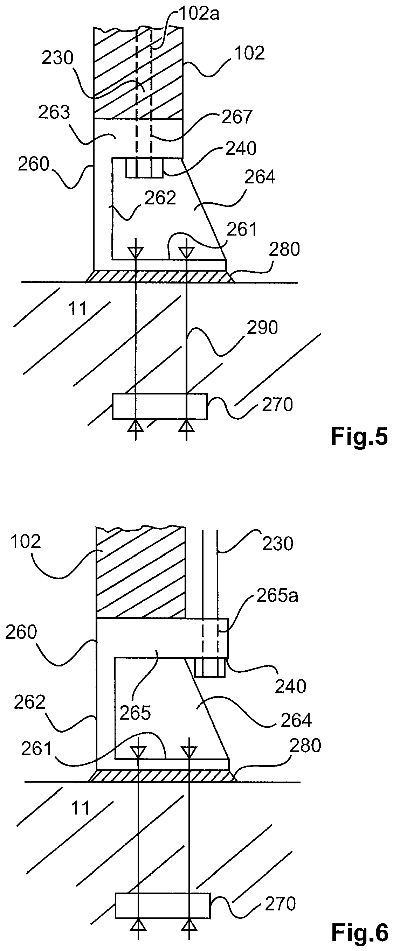

Fig. 5 zeigt eine schematische Schnittansicht eines Windenergieanlagen-Fundaments. In einem Betonfundament 11 werden mehrere Segmentanker 270 und Gewindestangen 290 vorgesehen, welche über das Fundament 11 hinausragen. Auf dem Fundament 11 kann eine Fuge 280 (z. B. eine Hartbetonfuge) vorgesehen sein, auf welcher ein Fundamentsegment 260 z. B. in Form eines umlaufenden Stahladapters vorgesehen ist. Der Stahladapter 260 weist ein unteres Ende 261, ein oberes Ende 263 sowie eine Seiten- bzw. Mantelfläche 262 auf. In dem oberen Ende 263 ist eine Mehrzahl von Bohrungen 267 vorgesehen. Die Bohrungen 267 dienen dazu, Spannlitzen bzw. Spannseile 230 aufzunehmen. Die Turmsegmente des Windenergieanlagenturms 102 weisen innen mehrere Bohrungen auf, durch welche die Spannlitzen bzw. Spannseile 230 geführt werden können. Die Spannlitzen bzw. Spannseile können mittels eines Spannlitzenkopfes 240, der an der Unterseite des oberen Endes 263 des Stahladapters 260 vorgesehen ist, verspannt werden.

Gemäß diesem Beispiel wird eine Innenverspannung des Turms der Windenergieanlage gezeigt.

Fig. 6 zeigt eine schematische Schnittansicht eines Fundaments einer nicht beanspruchten Windenergieanlage. Das Fundament gemäß eines weiteren, nicht beanspruchten Beispiels entspricht im Wesentlichen dem Fundament gemäß dem vorherigen Beispiel, wobei das obere Ende 265 länger ausgestaltet ist. Das obere Ende 265 weist eine Mehrzahl von Bohrungen 265a auf, welche zur Aufnahme von Spannlitzen bzw. Spannseilen 230 vorgesehen sind. Zur Verspannung der Spannlitzen bzw. Spannseile ist ein Spannlitzenkopf 240 unterhalb des oberen Endes 265 vorgesehen.

Gemäß diesem, nicht beanspruchten Beispiel wird somit eine externe Verspannung der Turmsegmente vorgesehen, wobei sich die Spannlitzen bzw. Spannseile 230 innerhalb des Turms befinden.

Gemäß den vorherigen beiden Beispielen kann der Stahladapter 260 durch eine Pagelmasse 264 ausgefüllt werden, was vorteilhaft hinsichtlich der Aussteifung des Adapters ist, sobald die Pagelmasse ausgehärtet ist.

Gemäß den vorherigen beiden Beispielen kann der Segmentanker 270 als ein Ankerring ausgestaltet sein.

Gemäß weiteren zwei, nicht beanspruchten Beispielen wird eine Fundamentsektion vorgesehen, welche teilweise in dem Fundament verankert ist. Ein oberes Ende der Fundamentsektion weist eine Mehrzahl von Bohrungen zur Aufnahme der Spannlitzen bzw. Spannseile auf, welche dann mittels eines Spannlitzenkopfes verspannt werden.

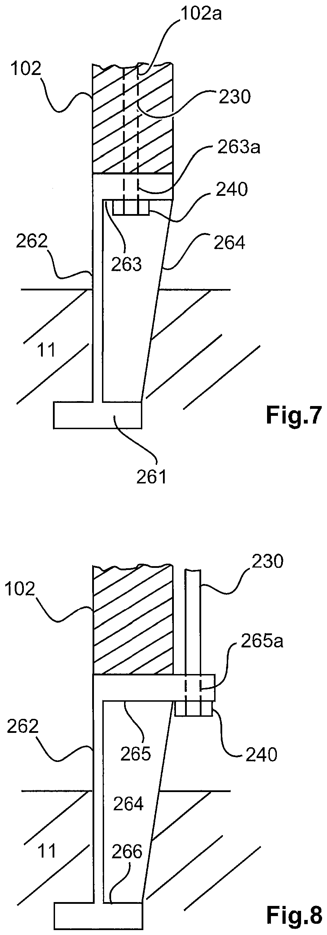

Fig. 7 zeigt eine schematische Schnittansicht eines Fundaments einer Windenergieanlage. Eine Fundamentsektion 260 weist ein unteres Ende 261 und ein oberes Ende 263 sowie eine Seiten- bzw. Mantelfläche 262 auf. Das untere Ende 261 der Fundamentsektion ist zumindest teilweise in einem Betonfundament 11 platziert. Das obere Ende 263 weist eine Mehrzahl von Bohrungen 263a auf. Auf dem oberen Ende 263 kann ein unteres Turmsegment eines Turms 102 der Windenergieanlage platziert werden. In der Wandung des Turmsegments ist eine Mehrzahl von Bohrungen 102a vorgesehen. Durch die Bohrungen 102a und die Bohrungen 263a können Spannseile eingeführt werden, welche dann mittels eines Spannseilkopfes 240 verspannt werden können.

Gemäß diesem Beispiel ist eine Innenverspannung vorgesehen.

Die Fundamentsektion 260 kann ein Versteifungsblech 264 aufweisen. Die Fundamentsektion 260 kann aus Metall hergestellt sein.

Fig. 8 zeigt eine schematische Schnittansicht eines Fundaments einer Windenergieanlage. Das Fundament gemäß dieser Windenergieanlage entspricht dem vorherigen Beispiel, wobei das obere Ende der Turmsektion länger ausgestaltet ist, so dass ein Abschnitt des oberen Endes 265 in den Turm hineinragt und dort eine Mehrzahl von Bohrungen 265a aufweist, durch welche Spannlitzen bzw. Spannseile 230 geführt werden können, damit diese dann durch einen Spannlitzenkopf 240 verspannt werden können.

Die Fundamentsektion 260 kann ein Versteifungsblech 264 aufweisen.

Gemäß diesem Beispiel ist somit eine externe Verspannung vorgesehen, wobei die Spannseile im Turminneren verlaufen.

## Patentansprüche

1. Windenergieanlage, mit
einem Fundament (210) und
einem Turm (102) mit mindestens einem Turmsegment (102a), das auf dem Fundament (210) platziert ist,
wobei das Fundament (210) eine Fundamentplatte (211) und einen Fundamentsockel (212) auf der Fundamentplatte (211) aufweist, der oberhalb des Bodenniveaus angeordnet ist,
wobei an dem Fundamentsockel (212) ein Spannlitzenanschluss (213, 214) mit einer Mehrzahl von Bohrungen (213a, 214a) zur Aufnahme von Spannlitzen (230) vorgesehen ist,
wobei die Spannlitzen (230) an einer Unterseite (213b, 214b) des Anschlusses (213, 214) mittels eines Spannlitzenkopfes (240) verspannt sind,
wobei die Fundamentplatte (211) und der Fundamentsockel (212) aus Ortbeton in einem Stück gegossen sind, wobei die Form des Fundamentsockels (212) an die Form eines unteren Turmsegmentes angepasst ist,
wobei das mindestens eine Turmsegment (102a) auf dem Fundamentsockel (212) platziert ist,
wobei ein Abstand zwischen einer Oberseite (211a) der Betonplatte (211) und einer Unterseite (213b, 214b) des Spannlitzenanschlusses (213, 214) oder einer Position des Spannlitzenkopfes so groß ist, dass Arbeiter ausreichend Platz haben, um die Spannlitzen (230) zu spannen.

2. Verfahren zum Errichten einer Windenergieanlage, die einen Turm mit mindestens einem Turmsegment (102a) aufweist, mit den Schritten:
Erstellen eines Fundaments (210) auf oder in einem Boden (10) mit einem Bodenniveau, durch Gießen einer Fundamentplatte (211) und eines Fundamentsockels (212) auf der Fundamentplatte (211) in einem Stück aus Ortbeton, wobei die Form des Fundamentsockels (212) an die Form eines unteren Turmsegmentes angepasst ist, wobei der Fundamentsockel (212) oberhalb des Bodenniveaus ist,
Angießen eines Spannlitzenanschlusses (213, 214) mit einer Mehrzahl von Bohrungen (213a, 214a) zur Aufnahme von Spannlitzen (230) an dem Fundamentsockel (212),
Platzieren eines Turmsegmentes (102a) des Turmes (102) auf dem Fundamentsockel (212) des Fundaments (210), und
Verspannen der Spannlitzen (230) an einer Unterseite (213b, 214b) des Anschlusses (213, 214) mittels eines Spannlitzenkopfes (240),
wobei ein Abstand zwischen einer Oberseite (211a) der Betonplatte (211) und einer Unterseite (213b, 214b) des Spannlitzenanschlusses (213, 214) oder einer Position des Spannlitzenkopfes so groß ist, dass Arbeiter ausreichend Platz haben, um die Spannlitzen (230) zu spannen.

## Claims

1. Wind energy plant comprising
a foundation (210) and
a tower (102) having at least one tower segment (102a) which is placed on the foundation (210)
wherein the foundation (210) has a foundation plate (211) and a foundation plinth (212) on the foundation plate (211) arranged above ground level,
wherein on the foundation plinth (212) a tension cord connector (213, 214) is provided with a plurality of bores (213a, 214a) for receiving tension cords (230)
wherein the tension cords (230) are tensioned on an underneath side (213b, 214b) of the connector (213, 214) by means of a tension cord head (240),
wherein the foundation plate (211) and the foundation plinth (212) are cast in one piece from site-mixed concrete,
wherein a shape of the foundation plinth (212) is adapted to the shape of a lower tower segment,
wherein the at least one tower segment (102a) is placed on the foundation plinth (212),
wherein a distance between the upper side (211a) of the foundation plate (211) and an underneath side (213b, 214b) of the tension cord connector (213, 214) or a position of the tension cord head is so great that workers have enough space to tension the tension cords (230).

2. Method for erecting a wind energy plant which comprises a tower with at least one tower segment (102a), comprising the steps of
arranging a foundation (210) on or in a ground (10) having a ground level by pouring a foundation plate (210) and a foundation plinth (212) on the foundation plate (211) in one piece by on side mixed concrete,
wherein a shape of the foundation plinth (212) is adapted to the shape of a lower tower segment,
wherein the foundation plinth (212) is arranged above ground level,
pouring a tension cord connector (213, 214) having a plurality of bores (213a, 214a) for receiving tensioning cords (230) at the foundation plinth (212),
placing a tower segment (102a) of the tower (102) on the foundation plinth (212) of the foundation (210) and
tensioning the tension cords (230) at an underside (213b, 214b) of the tensioning cord connector (213, 214) by means of a tensioning cord head (240),
wherein a distance between the upper side (211a) of the foundation plate (211) and an underneath side (213b, 214b) of the tension cord connector (213, 214) or a position of the tension cord head is so great that workers have enough space to tension the tension cords (230).

## Revendications

1. Éolienne avec
une fondation (210) et
une tour (102) avec au moins un segment de tour (102a) qui est placée sur la fondation (210),
dans laquelle la fondation (210) présente une plaque de fondation (211) et un socle de fondation (212) sur la plaque de fondation (211) qui est agencé au-dessus du niveau du sol,
dans laquelle un raccord de câbles tendeurs (213, 214) avec une pluralité de perçages (213a, 214a) pour la réception de câbles tendeurs (230) est prévu au niveau du socle de fondation (212),
dans laquelle les câbles tendeurs (230) sont tendus au niveau d'un côté inférieur (213b, 214b) du raccord (213, 214) au moyen d'une tête de câbles tendeurs (240),
dans laquelle la plaque de fondation (211) et le socle de fondation (212) sont coulés en béton préparé sur place en une pièce, dans laquelle la forme du socle de fondation (212) est adaptée à la forme d'un segment de tour inférieur,
dans laquelle l'au moins un segment de tour (102a) est placé sur le socle de fondation (212),
dans laquelle une distance entre un côté supérieur (211a) de la plaque de béton (211) et un côté inférieur (213b, 214b) du raccord de câbles tendeurs (213, 214) ou une position de la tête de câbles tendeurs est si grande que des travailleurs ont suffisamment de place pour tendre les câbles tendeurs (230).

2. Procédé d'installation d'une éolienne qui présente une tour avec au moins un segment de tour (102a), avec les étapes :
d'établissement d'une fondation (210) sur ou dans un sol (10) avec un niveau de sol, par coulage d'une plaque de fondation (211) et d'un socle de fondation (212) sur la plaque de fondation (111) en une pièce de béton préparé sur place, dans lequel la forme du socle de fondation (212) est adaptée à la forme d'un segment de tour inférieur, dans lequel le socle de fondation (212) est au-dessus du niveau de sol,
de coulage d'un raccord de câbles tendeurs (213, 214) avec une pluralité de perçages (213a, 214a) pour la réception de câbles tendeurs (230) au niveau du socle de fondation (212),
de placement d'un segment de tour (102a) de la tour (102) sur le socle de fondation (212) de la fondation (210), et
de tension des câbles tendeurs (230) au niveau d'un côté inférieur (213b, 214b) du raccord (213, 214) au moyen d'une tête de câbles tendeurs (240),
dans lequel une distance entre un côté supérieur (211a) de la plaque de béton (211) et un côté inférieur (213b, 214b) du raccord de câbles tendeurs (213, 214) ou une position de la tête de câbles tendeurs est si grande que des travailleurs ont suffisamment de place pour tendre les câbles tendeurs (20).
